# EUROPEAN PATENT SPECIFICATION

(11) **EP 0 382 287 B1**
(45) Date of publication and mention of the grant of the patent: **09.10.1996**
(21) Application number: 90200220.3
(22) Date of filing: 30.01.1990
(51) Int. Cl.: G09B 29/00

(54) **Information transmitting system**
Datenübertragungsgerät
Système de transmission d'informations

(30) Priority: 30.01.1989 NL 8900226
(43) Date of publication of application: 16.08.1990
(73) Proprietor: Iepenlaan Beheer B.V., 2061 GG Bloemendaal (NL)
(72) Inventor: Vogel, Robert Pieter,, NL-4064 CD Heesselt (NL)
(74) Representative: Hoijtink, Reinoud

(56) References cited:
- EP-A- 0 076 775
- FR-A- 2 563 931
- NL-A- 8 303 543
- US-A- 4 695 903

## Description

The invention relates to an information transfer system formed by monitor with screen placed in a sealed housing, an information storage device added to the monitor, communication means for coupling to a remotely located computer and operating means for selecting as desired information for display on the screen. Such a device is known from NL-A-8303543.

There is a wish to provide information at many locations accessible to the public. This information can be of a varied nature. For example at petrol filling stations there is a desire to furnish information about the traffic situation. In railway station halls or at airports information provision is likewise of essential importance to the public. On streets and squares it is also often necessary to provide passers-by with information, for instance by means of a village or city map guide.

Up until the present this information has usually been supplied in static form. A succession of stationary information images are also displayed. The user is not free to retrieve the information as required.

There exists a practical need for information provision wherein moving images can be displayed and wherein information can furthermore be updated. There is also a need for information provision wherein the user can retrieve the desired information at choice.

This is achieved according to the invention with the features as described in the characterizing part of claim 1.

With the information transfer system according to the invention information originating from the video information storage device and information transferred from the remotely located computer can be displayed simultaneously or successively. This latter information will be static information which can be merged according to a desired programme into the moving images which can originate from the information storage device. Information in the form of moving images can only be transferred form a remote location using special means. With the system according to the invention this problem is resolved by providing this type of information from the information storage device.

The operating means of the system are preferably formed by a keyboard. By operating the keyboard the user can retrieve the information desired by him/her. A video disc or a video tape can be employed as video information storage device.

Also preferably incorporated in the unit are means for simultaneous display of information from the information storage device and information from the remotely located computer. The display can be carried out in different ways. Text can for instance be shown in the moving images, although it is also possible to set aside a portion of the screen for static information. The housing is preferably placed at eye-level, for example on a pillar.

The public telephone network can be used as communication means. It is also possible to use a satellite link therefor. In order to enable commercial exploitation a coin-operated device for example is connected to the system. Only after insertion of a coin can the system become operative. A print-out device can also be connected to the unit in order to be able to permanently record the visualized information.

In the drawing:

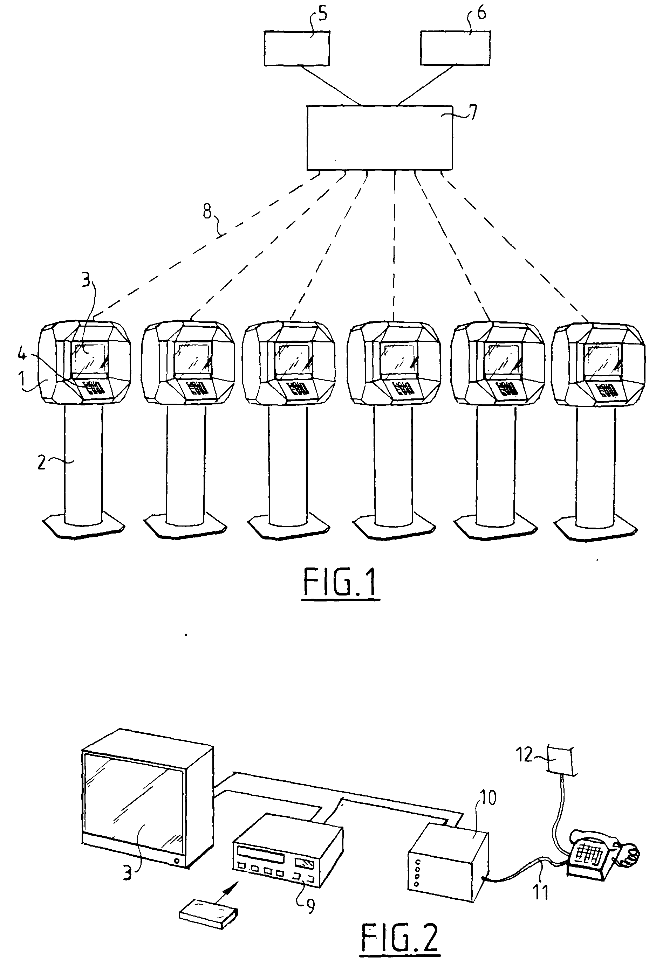

Fig. 1 shows a diagram of the system according to the invention, and
fig. 2 shows schematically the construction of the monitor.

The monitor 1 is placed on a pillar 2 and contains a screen and a keyboard 4 visible from the outside. Information that is continually updated can be passed from centres 5 and 6 via the computer 7 and the public telephone network 8 to the monitors.

Inside the monitor is situated an image display device 9 with which per se mutually exchangeable video tapes or discs can be displayed on the screen 3. Via the communication means 10 contact can be sought through the public telephone network 11 with an information supplier 12.

## Claims

1. Information transfer system formed by monitor with screen placed in a sealed housing, an information storage device added to said monitor, communication means for coupling to a remotely located computer and transmitting static information and operating means for selecting as desired static information to be displayed on said screen, **characterized in that** said information storage device is a video storage device for producing moving pictures and that means are provided to combine said static information and said moving pictures for display on said screen.

2. System as claimed in claim 1, **characterized in that** the information storage device is a video disc.

3. System as claimed in claim 1, **characterized in that** the information storage device is a video tape.

4. System as claimed in claims 1-3, **characterized in that** the operating means are formed by a keyboard.

5. System as claimed in claims 1-4, **characterized in that** means are incorporated in the unit for simultaneous display of information from the information storage device and information from the remotely located computer.

6. System as claimed in claims 1-5, **characterized in that** the housing is placed at eye-level.

7. System as claimed in claims 1-6, **characterized in that** the communication means is the public telephone network.

8. System as claimed in claims 1-7, **characterized in that** a coin-operated device connected to the system has to be operated to set said system into operation.

9. System as claimed in claims 1-8, **characterized in that** a print-out device is connected to the unit.

## Patentansprüche

1. Informationsübertragungsgerät, das durch einen Monitor mit einem Schirm, der in einem abgedichteten Gehäuse angeordnet ist, eine Informationsspeichervorrichtung, die zu dem Monitor hinzugefügt ist, ein Kommunikationsmittel zum Verbinden mit einem entfernt angeordneten Computer und Übertragen statischer Information und ein Betriebsmittel zum Auswählen als gewünschte statische Information, die auf dem Schirm anzuzeigen ist, gebildet ist,
dadurch gekennzeichnet, daß die Informationsspeichervorrichtung eine Videospeichervorrichtung zum Speichern bewegter Bilder ist und
daß Mittel vorgesehen sind zum Kombinieren der statischen Information und der bewegten Bilder zur Anzeige auf dem Schirm.

2. Gerät wie in Anspruch 1 beansprucht, dadurch gekennzeichnet, daß die Informationsspeichervorrichtung eine Videodisk ist.

3. Gerät wie in Anspruch 1 beansprucht, dadurch gekennzeichnet, daß die Informationsspeichervorrichtung ein Videoband ist.

4. Gerät wie in Ansprüchen 1 bis 3 beansprucht, dadurch gekennzeichnet, daß die Betriebsmittel durch eine Tastatur gebildet sind.

5. Gerät wie in Ansprüchen 1 bis 4 beansprucht, dadurch gekennzeichnet, daß Mittel in der Einheit zum gleichzeitigen Anzeigen von Information von der Informationsspeichervorrichtung und von Information von dem entfernt angeordneten Computer eingesetzt sind.

6. Gerät wie in Ansprüchen 1 bis 5 beansprucht, dadurch gekennzeichnet, daß das Gehäuse in Augenhöhe angeordnet ist.

7. Gerät wie in Ansprüchen 1 bis 6 beansprucht, dadurch gekennzeichnet, daß das Kommunikationsmittel das öffentliche Telefonnetz ist.

8. Gerät wie in Ansprüchen 1 bis 7 beansprucht, dadurch gekennzeichnet, daß eine münzbetätigte Vorrichtung, die mit dem Gerät verbunden ist, betätigt werden muß, um das Gerät in Betrieb zu setzen.

9. Gerät wie in Ansprüchen 1 bis 7 beansprucht, dadurch gekennzeichnet, daß eine Ausdruckvorrichtung mit der Einheit verbunden ist.

## Revendications

1. Système de transfert d'information constitué d'un moniteur avec écran situé dans un logement étanche, un dispositif de stockage d'information ajouté au-dit moniteur, des moyens de communication pour le couplage à un ordinateur situé à distance et transmettant une information statique et des moyens de commande pour sélectionner suivant les désirs l'information statique à afficher sur ledit écran, caractérisé en ceci que ledit dispositif de stockage de l'information est un dispositif de stockage vidéo pour produire des images mobiles et que des moyens sont fournis pour combiner l'information statique et lesdites images mobiles pour les afficher sur ledit écran.

2. Système selon la revendication 1, caractérisé par le fait que le moyen de stockage de l'information est un disque vidéo.

3. Système selon la revendication 1, caractérisé par le fait que le moyen de stockage de l'information est une bande vidéo.

4. Système selon les revendications 1-3, caractérisé par le fait que les moyens de commande sont constitués par un clavier.

5. Système selon les revendications 1-4, caractérisé par le fait que des moyens sont incorporés dans l'unité pour affichage simultané d'une information provenant d'un dispositif de stockage d'information et d'une information provenant d'un ordinateur situé à distance.

6. Système selon les revendications 1-5, caractérisé par le fait que le logement est situé à hauteur d'oeil

7. Système selon les revendications 1-6, caractérisé par le fait que les moyens de communication sont les réseaux de téléphone public.

8. Système selon les revendications 1-7, caractérisé par le fait qu'un dispositif de paiement par pièces, connecté au système, doit être utilisé pour placer le système en fonctionnement.

9. Système selon les revendications 1-8, caractérisé par le fait qu'un dispositif imprimant est connecté à l'unité.
